# EUROPÄISCHE PATENTSCHRIFT

(11) **EP 0 902 882 B1**
(45) Veröffentlichungstag und Bekanntmachung des Hinweises auf die Patenterteilung: **20.02.2002**
(21) Anmeldenummer: 97928149.0
(22) Anmeldetag: 06.06.1997
(51) Int. Cl.: G01F 1/66

(54) **DURCHFLUSSMESSER**
FLOWMETER
DEBITMETRE

(30) Priorität: 07.06.1996 GB 9611901
(43) Veröffentlichungstag der Anmeldung: 24.03.1999
(73) Patentinhaber: G. Kromschröder Aktiengesellschaft, D-49074 Osnabrück (DE)
(72) Erfinder: DISTON, Andrew, Stephen, Cambridge CB4 6AJ (GB); FRYER, Christopher, James, Newton, Woburn Sands, Buckinghamshire MK17 8PG (GB); KAMMERAHL, Andreas, D-49448 Lemfoerde (DE)
(74) Vertreter: Harlacher, Mechthild, Dipl.-Ing.
(86) Internationale Anmeldenummer: EP9702943
(87) Internationale Veröffentlichungsnummer: WO9747950

(56) Entgegenhaltungen:
- EP-A- 0 048 791
- WO-A-94/09342
- WO-A-94/17372
- WO-A-94/20821
- WO-A-96/06333
- FR-A- 2 369 566

## Beschreibung

Die Erfindung betrifft einen Durchflußmesser bei Medien, bei dem sich ein erster Schallwandler stromaufwärts von einem zweiten Schallwandler befindet und bei dem die Laufzeiten der Schallwellen zwischen den Wandlem zur Messung der Strömungsgeschwindigkeit eines zwischen ihnen strömenden strömungsfähigen Mediums verwendet werden nach dem Oberbegriff des Anspruches 1.

Aus der WO 96/06333 ist ein Durchflußrnesser bekannt, bei dem zwei konzentrische Rohre einen ringförmigen Strömungsdurchgang bilden. Das Medium gelangt zwar auch in das innere Rohr, aber nur bis zu einem zentralen Element, das die weitere Strömung verhindert. Die akustischen Signale werden an dem zentralen Element absorbiert oder reflektiert.

Aus der WO 94/09342 ist ein Durchflußmesser bekannt, der mit ebenen Schallwellen arbeitet. Der Strömungsweg ist in eine Vielzahl von parallelen Durchgängen unterteilt, die so dimensioniert sind, daß die charakterischtische Frequenz der ebenen Welle höher ist als die Übertragungsfrequenz bzw. die Sendefrequenz.

WO 94/17372 beschreibt einen Mediendurchflußmesser der eingangs beschriebenen Art, der eine durch eine Anordnung von Medienströmungsdurchgängen oder einen ringförmigen Medienströmungsdurchgang definierte Strömungsstruktur zwischen den Wandlern nutzt. Dieser Mediendurchflußrnesser funktioniert gut, wenn sich nur ebene Wellen zwischen den Wandlern ausbreiten. Dies kann im Falle von zylindrischen Medienströmungsdurchgängen sichergestellt werden, wenn die Wellenlänge des gesendeten Schalls größer als d/0,568 ist, wobei d der Durchmesser des Strömungsdurchgangs ist. Das in dieser Situation möglicherweise gegebene Problem besteht darin, daß diese relativ kleine Durchmessergröße unerwünschte Auswirkungen, beispielsweise hoher Druckverlust, und unerwünschte akustische Phasenverschiebungen am Einlaß und Auslaß des Medienströmungsdurchgangs zur Folge haben kann. Wird jedoch die Größe des Durchmessers erhöht, werden im Medienströmungsdurchgang Modi höherer Ordnung erzeugt, die zu Fehlern im Durchflußmesser führen. Insbesondere wenn eine aus einer ringförmigen Anordnung oder einem Ring von Durchgängen bestehende Strömungsstruktur zusammen mit einem mittig angeordneten koaxialen Wandler verwendet wird, werden asymmetrische Schallmodi erzeugt.

Demgemäß besteht die Aufgabe der Erfindung darin, diese Nachteile zu vermeiden.

Zur Lösung dieser Aufgabe ist der gattungsgemäße Durchflußmesser dadurch kennzeichnet, daß der Medienströmungsdurchgang mindestens eine Dämpfungsstruktur aufweist, die so angeordnet ist, daß mindestens ein asymmetrischer Schallfortpflanzungsmodus gedämpft wird, wobei die Dämpfungsstruktur sich im wesentlichen über die Länge des Medienströmungsdurchgangs erstreckt und am Umfang des Medienströmungsdurchgangs so angeordnet ist, daß sie mit der Stelle des Wellenbauches des mindestens einem asymmetrischen Schallfortpflanzungsmodus korrespondiert.

Es ist möglich, größere Strömungsdurchgänge zu verwenden und die mit asymmetrischen Schallfortpflanzungsmodi einhergehenden Probleme durch Verwendung von in geeigneter Weise angeordneten Dämpfungmitteln zu vermeiden. Dies ermöglicht, daß der ebene Wellenmodus die anderen Modi dominiert und die Auswirkungen der anderen Modi auf den resultierenden Medienströmungswert abgeschwächt werden.

Die Dämpfungsstruktur verläuft parallel zur Achse des Medienströmungsdurchgangs.

Als charakteristisches Merkmal hat ein asymmetrischer Schallfortpflanzungsmodus eine asymmetrische Verteilung um den Umfang des Medienströmungsdurchgangs. Es ist daher möglich, Wellenknoten und Wellenbäuche zu definieren, die verhältnismäßig niedriger bzw. hoher Energie des asymmetrischen Schallfortpflanzungsmodus entsprechen, und damit die Wirkung der Dämpfungsstruktur zu maximieren. Die Dämpfungsstruktur hat auch eine gewisse Wirkung auf die sich ausbreitende ebene Welle, hat aber im Verhältnis eine viel höhere Wirkung auf den asymmetrischen Schallfortpflanzungsmodus, so daß sich das Verhältnis aus am Empfänger ankommender Energie ebener Wellen zu Energie aus unerwünschten Modi wesentlich erhöht.

Die Dämpfungsstruktur könnte eine Schicht Dämpfungsmaterial umfassen, die am Medienströmungsdurchgang entlang angebracht ist, aber in vielen Fällen führt dies zu Turbulenzproblemen und ähnlichem. Vorzugsweise umfaßt die Dämpfungsstruktur daher eine zum Medienströmungsdurchgang hin ausgerichtete Öffnung, die in oder durch die Wand des Medienströmungsdurchgangs reicht. Im allgemeinen ist eine oder eine Reihe von Öffnungen an einer Seite ausreichend, aber in einigen Fällen könnte entsprechend den jeweiligen Wellenbäuchen des asymmetrischen Schallfortpflanzungsmodus auf gegenüberliegenden Seiten des Medienströmungsdurchgangs eine Reihe von Öffnungen eingebracht werden. Diese Öffnungen können in Form von Schlitzen, Löchern oder einer Reihe von Löchern ausgeführt werden. Die Öffnungen können ganz durch die Wand hindurch gehen oder als Blindöffnungen in der Wand enden.

Die Dämpfung des mindestens einen asymmetrischen Schallfortpflanzungmodus im Verhältnis zur ebenen Welle kann weiter durch schallabsorbierendes Material in der Öffnung oder an einem lateralen Außenende der Öffnung verbessert werden.

In einer weiteren Alternative könnte ein laterales Außenende oder die Wände der Öffnung mit einem Material abgedeckt werden, das eine Vielzahl von kleinen Ausnehmungen zur Einlaßseite der Öffnung hin hat. Dies führt zu hohen Viskositätsverlusten im Medium und zur starken Dämpfung des mindestens einen asymmetrischen Schallfortpflanzungsmodus. Die ebene Welle wird durch dieses Material kaum beeinflußt. Geeignetes Material wäre beispielsweise oberflächenrauhes Material wie etwa Sandpapier.

Die Erfindung ist auf eine Strömungsstruktur mit einem einzelnen Medienströmungsdurchgang anwendbar. Typischerweise ist jedoch eine Anordnung von Medienströmungsdurchgängen, typischerweise eine ringförmige Anordnung, gegeben, wobei die Durchgänge im Verhältnis zu den Wandlern symmetrisch angeordnet sind. In einer vorzugsweisen Ausführung hat jeder Durchgang eine an ihm entlang verlaufende Öffnung, wobei jede Öffnung zum jeweiligen Medienströmungsdurchgang hin ausgerichtet ist, an einer radial nach innen hin ausgerichteten Stelle des jeweiligen Medienströmungsdurchgangs angebracht ist und in oder durch die Wand des Medienströmungsdurchgangs reicht. Jede Öffnung kann blind sein oder mit einem gemeinsamen inneren Durchgang in Verbindung stehen. Diese Ausführung wird aus konstruktionstechnischen Gründen bevorzugt, erhöht aber auch die Dämpfungswirkung der einzelnen Öffnungen. Typischerweise ist der gemeinsame innere Durchgang ringförmig ausgeführt.

In einer anderen vorzugsweisen Ausführung umfaßt der Durchflußmesser eine Anordnung, typischerweise eine ringförmige Anordnung, von im Verhältnis zu den Wandlern symmetrisch angeordneten Medienströmungsdurchgängen, wobei jeder Durchgang eine an ihm entlang verlaufende Öffnung hat, jede Öffnung zum jeweiligen Medienströmungsdurchgang hin ausgerichtet ist, an einer radial nach außen hin ausgerichteten Stelle des jeweiligen Medienströmungsdurchgangs angebracht ist und in oder durch die Wand des Medienströmungsdurchgangs reicht.

Darüber hinaus könnten sowohl innere als auch äußere Öffnungen eingebracht werden.

Typischerweise haben im Falle einer Anordnung von Medienströmungsdurchgängen alle Durchgänge der Anordnung die gleiche Form. Darüber hinaus ist der Querschnitt des Medienströmungsdurchgangs bzw. der einzelnen Medienströmungsdurchgänge vorzugsweise kreisförmig, elliptisch, rechteckig oder sechseckig.

Die Erfindung könnte auch mit einem einzelnen, ringförmigen Medienströmungsdurchgang realisiert werden.

Die Erfindung ist für die Messung beliebiger Medien, einschließlich Flüssigkeiten, einsetzbar; sie ist jedoch insbesondere nützlich für die Messung von Gas und äußerst geeignet für die haushaltliche Gasmessung.

Einige Beispiele von Mecliendurchflußmessem in Übereinstimmung mit der Erfindung werden nun unter Bezugnahme auf die beiliegenden Zeichnungen beschrieben:
Fig. 1 ist ein Blockdiagramm des Gesamtsystems.
Fig. 2 ist ein Querschnitt der Durchflußsensorvorrichtung.
Fig. 3A bis 3I sind Schnitte entlang der Linie A-A in Fig. 2 von neun Beispielen der Erfindung.
Fig. 4A ist eine Seitenansicht und Fig. 4B eine Draufsicht zur schematischen Darstellung eines Teils eines weiteren Beispiels.

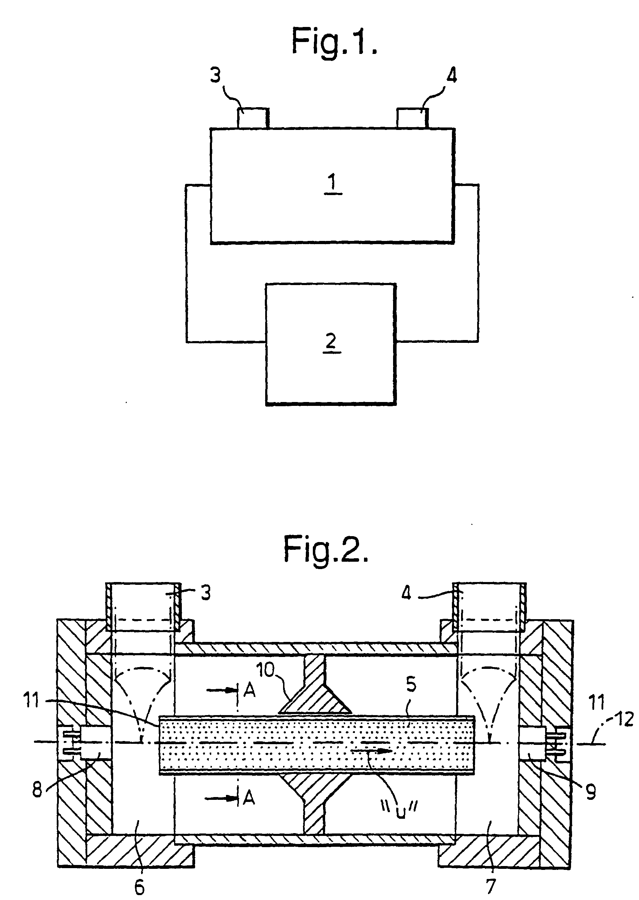

Der in Fig. 1 und 2 dargestellte Durchflußmesser besteht aus zwei Teilen: einem Durchflußsensor 1 und einem elektronischen Meßsystem 2. Das Medium tritt am Einlaß 3 in den Durchflußsensor ein, durchströmt eine die Einlaßkammer 6 und Auslaßkammer 7 verbindende Meßrohranordnung 5 und tritt am Auslaß 4 wieder aus.

Die Strömung wird im Durchflußsensor unter Verwendung von zwei Ultraschallwandlem 8 und 9 zum Senden und Empfangen von durch das Meßrohr laufenden Schallimpulsen gemessen. Die Zeitdifferenz Δt zwischen Sendung und Empfang wird vom elektronischen System 2 in Stromaufwärtsrichtung (+) und Stromabwärtsrichtung (-) gemessen. Aus diesen Messungen wird der Volumendurchfluß durch den Durchflußmesser wie beispielsweise in WO-A-94/17372 beschrieben bestimmt.

Das elektronische System 2 besteht typischerweise aus einem Signalgenerator, der für die stromaufwärtsseitige Messung den Wandler 8 ansteuert und nach dem Umschalten für die stromabwärtsseitige Messung den Wandler 9 ansteuert. Die akustischen Signale breiten sich durch die Meßrohranordnung 5 aus und werden vom anderen Wandler empfangen. Empfangene Signale werden digitalisiert und in einer digitalen Signalverarbeitungseinheit weiterverarbeitet, so daß der Durchflußwert bestimmt wird.

Einlaßkammer 6 ist ein zylindrischer Hohlraum, in den durch Einlaß 3 ein Medium so eingedüst wird, daß in Kammer 6 eine Medienströmung erzeugt wird, die keine Geschwindigkeitskomponente in axialer Richtung der Meßrohranordnung 5 hat.

Eine Innenrohrhalterung 10 kann so ausgeführt sein, daß jedes Signal vom direkten Weg wegreflektiert wird, so daß ein von ihr reflektiertes Echo das Signal des direkten Wegs nicht beeinflußt, bis die Messung erfolgt ist.

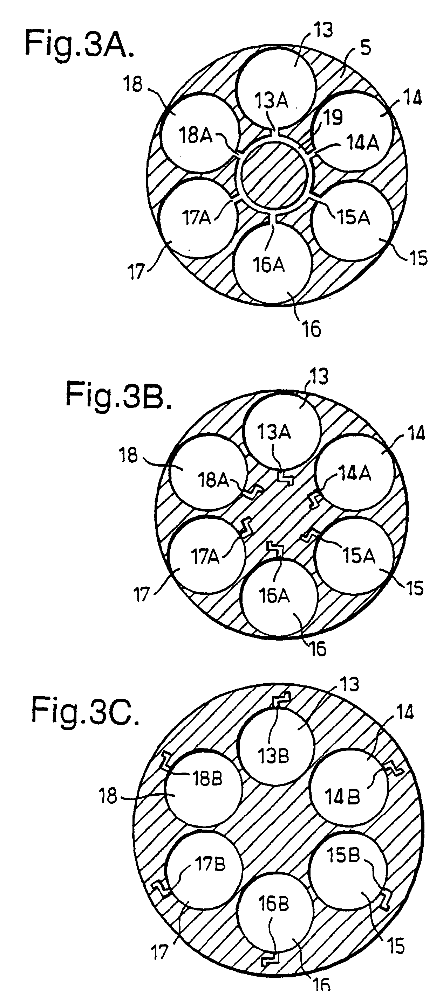

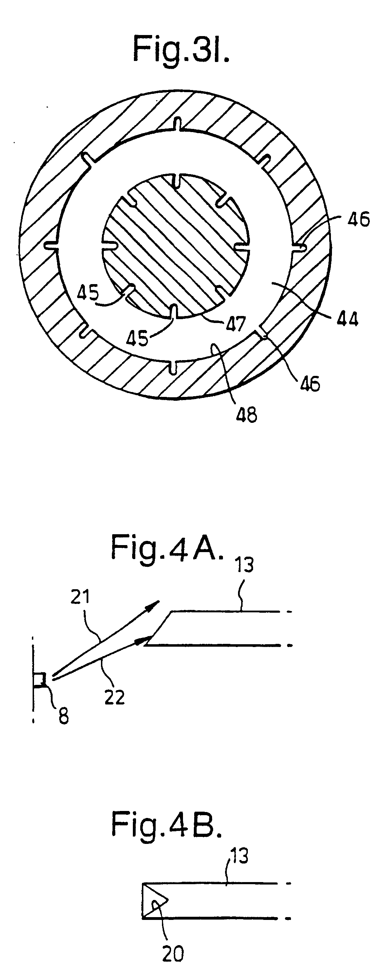

Fig. 3A ist ein Querschnitt durch ein erstes Beispiel der Meßanordnung 5. Anordnung 5 besteht aus 6 einzelnen zylindrischen Rohren 13 - 18. Jedes Rohr hat an seiner radial nach innen gerichteten Seite einen entsprechenden Schlitz 13A - 18A, der mit einem gemeinsamen ringförmigen Hohlraum 19 in Verbindung steht. Jeder Schlitz verläuft im wesentlichen achsparallel über die gesamte Länge der Rohre 13 - 18. Jeder Schlitz 13A- 18A ist umfangmäßig an einer Stelle angebracht, an der sich ein Wellenbauch eines asymmetrischen Modus an den Rohren 13 - 18 entlang fortpflanzt. Dies bedingt, daß Energie des asymmetrischen Modus durch die Schlitze 13A - 18A in den gemeinsamen Hohlraum 19 dringt. Auf diese Weise wird ein wesentlicher Teil des asymmetrischen Modus gedämpft. Alle ebenen Wellen, die sich durch die Rohre 13 - 18 ausbreiten, haben eine symmetrische Energieverteilung um den Umfang der Rohre, und obgleich im Bereich der Schlitze eine geringfügige Dämpfung besteht, wird sich der größte Teil der ebenen Welle im wesentlichen ungedämpft fortpflanzen. Damit wird das Verhältnis aus Energie ebener Wellen zu Energie aus asymmetrischem Modus wesentlich erhöht. Typische Abmessungen für die Schlitze 13A - 18A in Fig. 3A liegen für die Schlitzbreite im Bereich von λ/500 bis λ/2, wobei λ die Wellenlange des sich fortpflanzenden akustischen Signals ist. Die Schlitztiefe kann für verschiedene Ausführungen optimiert werden. Die radiale Abmessung des ringförmigen Hohlraums liegt vorzugsweise im Bereich von λ/500 bis λ/10.

Fig. 3B beschreibt ein zweites Beispiel, das eine modifizierte Ausführung des Beispiels aus Fig. 3A ist. Bei diesem Beispiel sind die Schlitze 13A - 18A blind und stehen nicht mit einem zentralen gemeinsamen Hohlraum in Verbindung. Die Schlitze sind länglich und zwecks Platzeinsparung gebogen.

Fig. 3C beschreibt eine alternative Ausführung zu Fig. 3B. Bei dieser Ausführung sind statt der radial nach innen gerichteten Schlitze 13A - 18A radial nach außen gerichtete Schlitze 13B - 18B eingebracht.

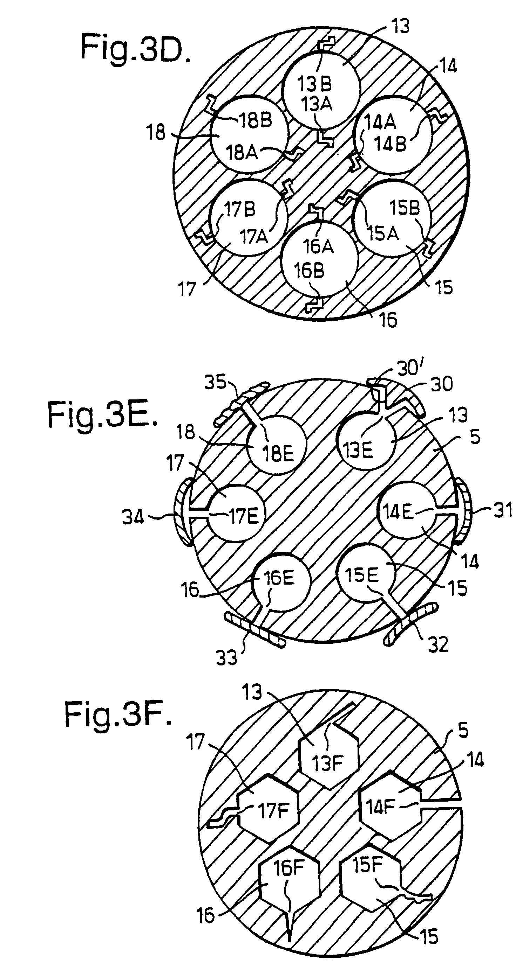

Fig. 3D beschreibt eine weitere Ausführung, bei der jeder Strömungsdurchgang
13 - 18 sowohl einen radial nach innen gerichteten Schlitz 13A - 18A als auch einen radial nach außen gerichteten Schlitz 13B - 18B hat, die sich diametral gegenüberliegen. In diesem Fall sind die radial nach innen gerichteten Schlitze
13A - 18A als Blindschlitze dargestellt. Sie könnten jedoch auch ähnlich der in Fig. 3A dargestellten Anordnung mit einem gemeinsamen Hohlraum in Verbindung stehen.

Für einen maximalen Wirkungsgrad ohne erhebliche Beeinträchtigung der Strömung des Mediums sollten die Schlitze relativ dünn, aber von wesentlicher Tiefe sein. Typischerweise liegt die Schlitzbreite im Bereich von λ/500 bis λ/10. Die Schlitztiefe für Blindschlitze liegt typischerweise im Bereich λ/2 bis λ/8. Für eine Wandlerfrequenz von 40 kHz in Luft liegt die Schlitzbreite vorzugsweise bei 0,1 mm bis 0,4 mm, die Schlitztiefe für Blindschlitze liegt vorzugsweise zwischen 2,0 mm und 3,0 mm.

Zur Steigerung der Dämpfung von mindestens einem asymmetrischen sich durch die Rohre fortpflanzenden Modus können die radial nach innen gerichteten Enden der Schlitze 13A - 18A, 13B - 18B mit einem geeigneten schallabsorbierenden Material abgedeckt werden (nicht dargestellt). Darüber hinaus wäre es gleichfalls möglich, die radial nach innen gerichteten Enden der Schlitze 13A - 18A, 13B- 18B mit einem Material abzudecken, das eine Vielzahl von sehr kleinen Ausnehmungen hat, die hohe Viskositätsverluste im Medium, beispielsweise in Gas. bedingen und den asymmetrischen Modus stark dämpfen

Fig. 3E beschreibt eine Ausführung, bei der jeder Strömungsdurchgang 13 - 18 einen radial nach außen gerichteten, durch Anordnung 5 durchgeführten Schlitz 13E- 18E hat. In diesem Fall sind jedoch nicht alle Schlitze 13E - 18E von gleicher Form oder Länge. So hat Schlitz 13E einen V-förmigen Querschnitt, während die Schlitze 14E, 15E und 18E länger sind als die Schlitze 16E und 17E. In jedem Fall sind die radial nach außen gerichteten Enden der Schlitze 13E - 18E durch ein entsprechendes Teil 30 - 35 aus schallabsorbierendem Material abgedeckt, wobei diese Teile unterschiedlicher Form sind. Dies ist insbesondere bei Teil 30 der Fall, das mit einem Keil 30' versehen ist, der in den Schlitz 13E hineinreicht und den Schlitz in zwei Teilschlitze unterteilt.

Fig. 3F beschreibt eine Variation des Beispiels aus Fig. 3C. Bei dieser Variation hat jeder Strömungsdurchgang 13 - 17 einen sechseckigen Querschnitt und jeder Schlitz 13F - 17F eine andere Form. Schlitz 13F etwa ist eine blinde zylindrische Bohrung, Schlitz 14F ist eine durch die Wand von Anordnung 5 geführte zylindrische Bohrungsöffnung, Schlitz 15F hat eine gebogene und unebene Wandoberfläche, Schlitz 16F läuft spitz auf einen Punkt zu und Schlitz 17F ist wellig ausgeführt.

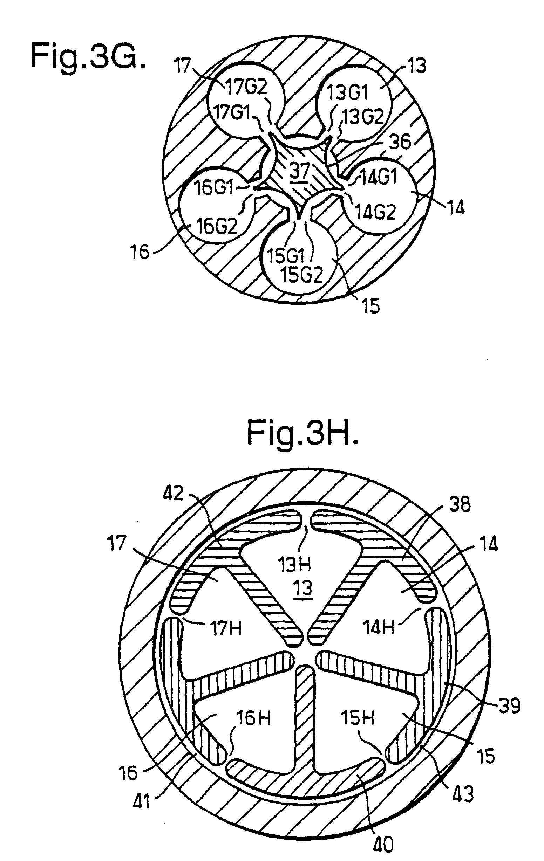

Fig. 3G beschreibt eine Variation des Beispiels aus Fig. 3A. In diesem Fall hat jeder Strömungsdurchgang 13 - 17 einen Schlitz mit einem relativ großen Durchmesser, der mit einem zentralen Hohlraum 36 in Verbindung steht, der ein festes Teil 37 mit einem sternförmigen Querschnitt aufnimmt, wobei die Zacken des Sterns in die jeweiligen Schlitze hineinreichen. Auf diese Weise ist jeder Schlitz in nahe an der Stelle des Wellenbauchs liegende Schlitzpaare 13G1, 13G2, etc, unterteilt.

In Fig. 3H werden die Strömungsdurchgänge 13 - 17 durch eine Anzahl von umfangsmäßig in einem Abstand angeordneten Teilen 38 - 42 gebildet, wobei jedes Teil einen insgesamt T-förmigen Querschnitt hat. Die radial nach außen öffnenden Schlitze 13H - 17H werden durch den Abstand zwischen den Teilen 38 - 42 gebildet, wobei jeder Schlitz in einen gemeinsamen ringförmigen Außenhohlraum 43 mündet.

Fig. 3I zeigt einen einzelnen ringförmigen Strömungsdurchgang 44, der durch blinde radial nach innen öffnende Schlitze 45 in der Innenwand 47 und blinde radial nach außen öffnende Schlitze 46 in der Außenwand 48 gebildet wird.

Obgleich für diese Beispiele verschiedene Schlitzformen gezeigt wurden, ist grundsätzlich jede Form von Öffnung oder einer Reihe von Öffnungen einsetzbar.

Als Zusatz zu den Beispielen in Fig. 3 können die Enden der Rohre 13 - 18 gemäß der Darstellung aus Fig. 4A so geneigt werden, daß sich ein V-förmiger Querschnitt ergibt (Fig. 4B). In diesem Fall breitet sich nichtaxiale (asymmetrische) Energie am Ende der Rohre 13 - 18 gemäß der Darstellung durch Pfeil 21 aus, während sich ebene Wellen durch die Rohre 13 - 18 gemäß der Darstellung durch Pfeil 22 fortpflanzen.

Beispielsweise ist die Medienströmungsdurchgangsachse lateral gegen einen der Wandler versetzt, wobei der Einlaß zum Medienströmungsdurchgang so ausgestaltet ist, daß ein Teil des mindestens einen asymmetrischen Schallfortpflanzungsmodus nicht in den Medienströmungsdurchgang eingekoppelt ist. Dies schafft eine sehr einfache Form der "Dämpfung" in der Weise, daß der Einlaß zum Medienströmungsdurchgang konstruktiv so ausgelegt ist, daß der mindestens eine asymmetrische Schallfortpflanzungsmodus lediglich teilweise, wenn überhaupt, in den Medienströmungsdurchgang eingekoppelt ist. Beispielsweise könnte der Einlaß zum Medienströmungsdurchgang im Verhältnis zur Medienströmungsdurchgangsachse in der Weise geneigt sein, daß der Einlaß in einer vom Wandler weggeneigten Ebene liegt.

## Patentansprüche

1. Ein Durchflußmesser für Medien mit zwei Wandlern (8, 9), die in einem Abstand voneinander in Strömungsrichtung des Mediums angeordnet sind, mit einer Sendeeinrichtung zur Sendung akustischer Signale in beide Richtungen durch das Medium mittels der Wandler und einer Verarbeitungseinrichtung (2) zur Bestimmung von Informationen über die Medienströmung durch Überwachung der Laufzeiten der von den Wandlern empfangenen akustischen Signale, wobei ein Teil des Raums zwischen den Wandlern einen Strömungsweg definiert, der aus einer Strömungsstruktur mit mindestens einem axial in Strömungsrichtung des Mediums verlaufenden Medienströmungsdurchgang (13 - 18) besteht, **dadurch gekennzeichnet, daß** der Medienströmungsdurchgang (13 - 18) mindestens eine Dämpfungsstruktur (13A - 18 H) aufweist, die so angeordnet ist, daß mindestens ein asymmetrischer Schallfortpflanzungsmodus gedämpft wird, wobei die Dämpfungsstruktur (13A - 18H) sich im wesentlichen über die Länge des Medienströmungsdurchgangs (13 - 18) erstreckt und am Umfang des Medienströmungsdurchgangs so angeordnet ist, daß sie mit der Stelle eines Wellenbauches des mindestens einen asymmetrischen Schallfortpflanzungsmodus korrespondiert.

2. Durchflußmesser nach Anspruch 1, wobei die Dämpfungsstruktur eine zum Medienströmungsdurchgang hin ausgerichtete Öffnung (13A - 18H) aufweist, die in oder durch die Wand des Medienströmungsdurchgangs reicht.

3. Ein Durchflußmesser nach Anspruch 1 oder 2, wobei die Breite der Öffnung (13A - 18H) im Bereich von λ/500 bis λ/10 vorzugsweise im Bereich vonλ/100 bis λ/20 liegt, worin λ die Wellenlänge des sich durch den Medienströmungsdurchgang fortpflanzenden akustischen Signals ist.

4. Durchflußmesser nach einem der Ansprüche 2 oder 3, wobei die Tiefe der Öffnung (13A - 18H) im Bereich von λ/2 bis λ/8 liegt, worin λ die Wellenlänge des sich durch den Medienströmungsdurchgang fortpflanzenden akustischen Signals ist.

5. Durchflußmesser nach einem der Ansprüche 2 bis 4, **dadurch gekennzeichnet, daß** in der Öffnung (13A - 18H) oder an einem lateralen Außenende der Öffnung ein schallabsorbierendes Material vorgesehen ist oder daß sich an einem lateralen Außenende ein Teil (30 - 34) aus schallabsorbierendem Material befindet.

6. Durchflußmesser nach einem der Ansprüche 2 bis 5, wobei ein laterales Außenende der Öffnung, ein Teil (30 - 34) am lateralen Außenende der Öffnung oder die Wände der Öffnung mit einem Material abgedeckt sind, das eine Vielzahl von kleinen Ausnehmungen zur Einlaßseite der Öffnung hin hat.

7. Durchflußmesser nach einem der Ansprüche 2 bis 6, der eine im Verhältnis zu den Wandlern symmetrisch ausgerichtete Anordnung von Medienströmungsdurchgängen (13 - 18) umfaßt, wobei jeder Durchgang eine an ihm entlang verlaufende Öffnung (13A,G - 18 A,G) hat, jede Öffnung zum jeweiligen Medienströmungsdurchgang hin ausgerichtet ist, an einer radial nach innen hin ausgerichteten Stelle des jeweiligen Medienströmungsdurchgangs angebracht ist und in oder durch die Wand des Medienströmungsdurchgangs reicht.

8. Durchflußmesser nach einem der Ansprüche 2 bis 7, der eine im Verhältnis zu den Wandlern symmetrisch ausgerichtete Anordnung von Medienströmungsdurchgängen umfaßt, wobei jeder Durchgang eine an ihm entlang verlaufende Öffnung (13B-18B, E, F, I, H) hat, jede Öffnung zum jeweiligen Medienströmungsdurchgang hin ausgerichtet ist, an einer radial nach außen hin ausgerichteten Stelle des jeweiligen Medienströmungsdurchgangs angebracht ist und in oder durch die Wand des Medienströmungsdurchgangs reicht.

9. Durchflußmesser nach Anspruch 7 oder 8, wobei die Öffnungen (13 A-18I) mit einem gemeinsamen inneren Durchgang (19) oder einem gemeinsamen Durchgang (43) in Verbindung stehen.

10. Durchflußmesser nach Anspruch 9, wobei der gemeinsame innere oder äußere Durchgang (19, 43) ringförmig ausgeführt ist.

11. Durchflußmesser nach einem der Ansprüche 7 bis 10, wobei die Medienströmungsdurchgänge (13 - 18) eine ringförmige Anordnung bilden.

12. Durchflußmesser nach mindestens den Ansprüchen 7 und 8, wobei jeder Medienströmungsdurchgang radiale nach innen und nach außen gerichtete Öffnungen (13A - 18H) hat.

13. Durchflußmesser nach einem der Ansprüche 1 bis 11, der einen koaxial zu den Wandlern ausgerichteten ringförmigen Medienströmungsdurchgang (44) umfaßt, wobei eine bzw. mehrere zum ringförmigen Medieriströmungsdurchgang hin ausgerichtete Öffnungen (45, 46) eingebracht sind und die bzw. jede Öffnung (45, 46) in einer radial nach innen bzw. radial nach außen bzw. sowohl radial nach innen als auch radial nach außen ausgerichteten Stelle des ringförmigen Medienströmungsdurchgangs angeordnet sind.

14. Durchflußmesser nach einem der Ansprüche 1 bis 13, wobei die Medienströmungsdurchgänge (13 - 18) zylindrisch ausgeführt sind.

15. Durchflußmesser nach einem der Ansprüche 1 bis 14, wobei der Einlaß (20) zum Medienströmungsdurchgang im Verhältnis zur Medienströmungsdurchgangsachse in der Weise geneigt ist, daß der Einlaß in einer vom Wandler weggeneigten Ebene liegt.

## Claims

1. A fluid flow meter comprising a pair of transducers (8, 9) spaced apart in the direction of fluid flow; transmitting means for causing acoustic signals to be transmitted in both directions through the fluid by the transducers; and processing means (2) for determining information relating to the fluid flow by monitoring the time of flight of acoustic signals received by the transducers, wherein part of the space between the transducers defines a flow path consisting of a flow structure having at least one fluid flow passage (13 - 18) which extends axially in the direction of fluid flow, **characterised in that** the fluid flow passage (13 - 18) exhibits at least one attenuation structure (13A-18H) positioned so as to attenuate at least one asymmetric acoustic propagation mode, the attenuation structure (13A - 18H) extending substantially along the length of the fluid flow passage (13 - 18) and being positioned to correspond with the location of an anti-node of the at least one asymmetric acoustic propagation mode.

2. A meter according to claim 1, wherein the attenuation structure comprises an opening (13A - 18H) facing into the fluid flow passage and extending into or through the wall of the fluid flow passage.

3. A meter according to claim 1 or 2, wherein the width of the opening (13A-18H) is in the range λ/500 to λ/10, preferably in the range λ/100 to λ/20, where λ is the wavelength of the acoustic signal propagated along the fluid flow passage.

4. A meter according to either one of claims 2 or 3, wherein the depth of the opening (13A - 18H) is in the range λ/2 to λ/8 where λ is the wavelength of the acoustic signal propagated along the fluid flow passage.

5. A meter according to any of claims 2 to 4, **characterised in that** sound absorbent material is provided within or at a laterally outer end of the opening (13A - 18H) or a member (30 - 34) of sound absorbent material is located at a laterally outer end.

6. A meter according to any of claims 2 to 5, wherein a laterally outer end of the opening, a member (30 - 34) at the laterally outer end of the opening or the walls of the opening are covered with a material which presents a multiplicity of small cavities towards the opening entrance.

7. A meter according to any of claims, 2 to 6, the meter including an array of fluid flow passages (13 - 18) arranged symmetrically with respect to the transducers, wherein each passage has an opening (13A, G - 18A,G) extending along it, each opening facing into the respective fluid flow passage, being positioned at a radially inward position of the respective fluid flow passage, and extending into or through the wall of the fluid flow passage.

8. A meter according to any of claims 2 to 7, the meter including an array of fluid flow passages arranged symmetrically with respect to the transducers, wherein each passage has an opening (13B - 18B, E, F, I, H) extending along it, each opening facing into the respective fluid flow passage, being positioned at a radially inward position of the respective fluid flow passage, and extending into or through the wall of the fluid flow passage.

9. A meter according to either one of claims 7 or 8, wherein the openings (13A-18I) are in communication with a common, internal passage (19) or a common outer passage (43).

10. A meter according to claim 9, wherein the common, internal or outer passage (19, 43) has an annular shape.

11. A meter according to any claims 7 to 10, wherein the fluid flow passages (13-18) are arranged in an annular array.

12. A meter according to at least claims 7 and 8, wherein each fluid flow passage has radially inward and radially outward openings (13A - 18H).

13. A meter according to any of claims 1 to 11, the meter including an annular fluid flow passage (44) arranged coaxial with respect to the transducers, wherein one or more openings (45, 46) are provided facing into the annular fluid flow passage, the or each opening (45, 46) being positioned radially inwardly or radially outwardly or both radially inwardly and radially outwardly of the annular fluid flow passage.

14. A meter according to any of claims 1 to 13, wherein the fluid flow passages (13 - 18) are cylindrical.

15. A meter according to any one of claims 1 to 14, wherein the entrance (20) to the fluid flow passage is slanted with respect to the fluid flow passage axis such that the entrance is in a plane inclined in a direction away from the transducer.

## Revendications

1. Débitmètre pour fluides avec deux çonvertisseurs (8, 9), disposés l'un de l'autre à une certaine distance en direction du flux d'écoulement du fluide, avec un dispositif d'émission pour la transmission de signaux acoustiques dans les deux sens à travers le fluide moyennant les convertisseurs, et un dispositif de traitement (2) pour la détermination d'informations concernant l'écoulement du fluide par la surveillance des temps de transit des signaux acoustiques reçus par les convertisseurs, où une partie de l'espace entre les convertisseurs définit un parcours d'écoulement consistant d'une structure d'écoulement avec au moins un passage d'écoulement de fluide (13-18) s'étendant de façon axiale dans le sens d'écoulement de fluide, **caractérisé par le fait que** le passage d'écoulement de fluide (13-18) présente au moins une structure d'amortissement (13A-18H), disposée de la sorte qu'au moins un mode asymétrique de propagation de son est amorti, où la structure d'amortissement (13A-18H) s'étend essentiellement sur la longueur du passage d'écoulement de fluide (13-18) et où elle est disposée à la circonférence du passage d'écoulement de fluide de la sorte qu'elle correspond avec l'endroit d'un ventre d'onde du mode asymétrique de propagation de son au nombre d'au moins un.

2. Débitmètre suivant la revendication 1, où la structure d'amortissement présente une ouverture (13A-18H) dirigée vers le passage d'écoulement de fluide et s'étendant dans ou à travers la paroi du passage d'écoulement de fluide.

3. Débitmètre suivant l'une des revendications 1 ou 2, où la largeur de l'ouverture (13A-18H) se situe dans une plage de λ/500 à λ/10, de préférence λ/100 à λ/20, λ étant la longueur d'onde du signal acoustique se propageant à travers le passage d'écoulement de fluide.

4. Débitmètre suivant l'une des revendications 2 ou 3, où la profondeur de l'ouverture (13A-18H) se situe dans une plage de λ/2 à λ/8, λ étant la longueur d'onde du signal acoustique se propageant à travers le passage d'écoulement de fluide.

5. Débitmètre suivant l'une des revendications 2 à 4, **caractérisé par le fait que** dans l'ouverture (13A-18H) ou à une extrémité extérieure latérale de l'ouverture est prévu un matériau à absorption acoustique ou qu'à une extrémité extérieure latérale se trouve une partie (30-34) en matériau à absorption acoustique.

6. Débitmètre suivant l'une des revendications 2 à 5, où une extrémité extérieure latérale de l'ouverture, une partie (30-34) à l'extrémité extérieure latérale de l'ouverture ou les parois de l'ouverture sont couvertes d'un matériau présentant une multitude de petits creux du côté entrée de l'ouverture.

7. Débitmètre suivant l'une des revendications 2 à 6, comportant une disposition de passages d'écoulement de fluide (13-18) symétrique par rapport aux convertisseurs, où chaque passage est doté d'une ouverture s'étendant le long de celui-ci (13A, G-18A, G), où chaque ouverture est dirigée vers le passage d'écoulement de fluide correspondant, disposée à un endroit, dirigé de façon radiale vers l'intérieur, du passage d'écoulement de fluide correspondant et s'étend dans ou à travers la paroi du passage d'écoulement de fluide.

8. Débitmètre suivant l'une des revendications 2 à 6, comportant une disposition de passages d'écoulement de fluide symétrique par rapport aux convertisseurs, où chaque passage est doté d'une ouverture s'étendant le long de celui-ci (13B-18B, E, F, I, H) où chaque ouverture est dirigée vers le passage d'écoulement de fluide correspondant, disposée à un endroit, dirigé de façon radiale vers l'extérieur, du passage d'écoulement de fluide correspondant et s'étend dans ou à travers la paroi du passage d'écoulement de fluide.

9. Débitmètre suivant l'une des revendications 7 ou 8, où les ouvertures (13A-18I) sont en liaison avec un passage intérieur commun (19) ou un passage commun (43).

10. Débitmètre suivant la revendication 9, où le passage intérieur ou extérieur commun (19, 43) est conçu sous forme annulaire.

11. Débitmètre suivant l'une des revendications 7 à 10, où les passages d'écoulement de fluide (13-18) forment une disposition annulaire.

12. Débitmètre suivant au moins les revendications 7 et 8, où chaque passage d'écoulement de fluide dispose des ouvertures (13A-18H) dirigées vers l'intérieur et vers l'extérieur.

13. Débitmètre suivant l'une des revendications 1 à 11, comportant un passage d'écoulement de fluide (44) sous forme annulaire, dirigé de façon coaxial vers les convertisseurs, où sont prévues une resp plusieurs ouvertures, dirigées vers le passage d'écoulement de fluide sous forme annulaire, et où l'ouverture resp. chaque ouverture (45, 46) est disposée à un endroit, dirigé de façon radiale vers l'intérieur resp. vers l'extérieur resp. aussi bien vers l'intérieur que vers l'extérieur, du passage d'écoulement de fluide sous forme annulaire.

14. Débitmètre suivant l'une des revendications 1 à 13, où les passages d'écoulement de fluide (13-18) sont conçus sous forme cylindrique.

15. Débitmètre suivant l'une des revendications 1 à 14, où l'entrée (20) du passage d'écoulement de fluide est inclinée vis-à-vis de l'axe du passage d'écoulement de fluide de la sorte que l'entrée se trouve sur un plan opposé du convertisseur.
